# EUROPEAN PATENT APPLICATION

(11) **EP 4 826 137 A1**
(43) Date of publication of application: **21.10.2026**
(21) Application number: 24903319.2
(22) Date of filing: 16.10.2024
(51) Int. Cl.: C25B 11/031, B01J 23/72, C25B 3/07, C25B 3/26, C25B 11/046

(54) **POROUS CU MEMBER**

(30) Priority: 14.12.2023 JP 2023211354
(71) Applicant: Mitsubishi Materials Corporation, Tokyo 100-8117 (JP)
(72) Inventor: SANO, Yosuke, Saitama-shi, Saitama 330-8508 (JP); OHMORI, Shinichi, Saitama-shi, Saitama 330-8508 (JP)
(74) Representative: Gille Hrabal Partnerschaftsgesellschaft mbB Patentanwälte
(86) International application number: PCT/JP2024/036863
(87) International publication number: WO 2025/126656

(57) **Abstract**

A porous Cu member includes a member main body (11) that is formed of Cu or a Cu alloy and has a porous structure, and a nano-Cu structure layer (16) that is formed on at least a part of a surface of the member main body (11), in which the member main body (11) has a porosity in a range of 38% or greater and 95% or less and a thickness in a range of 0.1 mm or greater and 1.0 mm or less, and the nano-Cu structure layer (16) is formed as a layer by laminating Cu particles having an average length of 20 µm to 1 nm on the surface.

## Description

### TECHNICAL FIELD

The present invention relates to a porous Cu member formed of Cu or a Cu alloy, and particularly relates to a porous Cu member suitable as an electrode for carbon dioxide reduction by a co-electrolysis method.

Priority is claimed on Japanese Patent Application No. 2023-211354, filed December 14, 2023, the content of which is incorporated herein by reference.

### BACKGROUND ART

In the present time when global warming is accelerating, in particular, the reduction of greenhouse gases (GHGs) such as CO₂ gas in the atmosphere is a common problem in the world.

In recent years, development of carbon dioxide capture, utilization (CCU) technologies for using carbon dioxide in the atmosphere as a raw material for useful chemical products has been accelerated. Carbon dioxide is a compound with a carbon oxidation number of +4, which is in a highest oxidation number state, and with a standard Gibbs free energy of formation of about 400 kJ/mol, which is extremely stable. In order to convert carbon dioxide into a useful chemical product, it is necessary to reduce carbon dioxide with a large amount of energy. There is a demand for the development of a technology of enabling energy-efficient reduction of carbon dioxide.

In recent years, a co-electrolysis method using an electrolytic cell composed of a polymeric ion exchange membrane has attracted attention (see, for example, Patent Documents 1 and 2). The co-electrolysis method is a technology of simultaneously performing electrolysis by an oxidation reaction at an anode and electrolysis by a reduction reaction at a cathode in an electrochemical cell. For example, CO₂ can be reduced using protons generated from the electrolysis of H₂O by using water at the anode and a KHCO₃ aqueous solution or CO₂ gas at the cathode as raw materials. In a case where Ag is used as a catalyst, CO gas can be obtained from CO₂ with a high Faraday efficiency.

In a case where Cu is used as a catalyst, an organic compound (for example, ethanol) having C2 (the number of carbon atoms is two) or more with a high Faraday efficiency can be obtained from CO₂.

In recent years, it has been clarified that the Faraday efficiency of a compound having C2 or more is improved due to differences in oxidation number of Cu and a nanoscale geometric structure. A CO₂ reduction catalyst having high-performance by controlling a nano structure has been proposed.

Here, carbon paper carrying Cu particles having a nanoscale size is used as an electrode for the co-electrolysis method.

### Citation List

### Patent Documents

Patent Document 1: Japanese Unexamined Patent Application, First Publication No. 2022-049861
Patent Document 2: Japanese Unexamined Patent Application, First Publication No. 2022-040803

### SUMMARY OF INVENTION

### Technical Problem

However, in the carbon paper carrying Cu particles having a nanoscale size, there is a concern that the carbon paper may be crushed in the electrolytic cell due to weak mechanical strength.

In addition, in a case where the carbon paper is used as an electrode for the co-electrolysis method, it is necessary to introduce a CO₂ gas as a raw material or to discharge a liquid such as ethanol produced after a reaction to the outside of a cell, but the carbon paper has a problem in that the production efficiency is decreased due to a relatively high pressure loss with respect to a gas or a liquid.

The present invention has been made in consideration of the above-described circumstances, and an objective thereof is to provide a porous Cu member which has sufficient mechanical strength, has a low pressure loss with respect to a gas or a liquid, and can efficiently produce a C2 or more organic compound such as ethanol by promoting a CO₂ reduction reaction.

### Solution to Problem

In order to achieve the above-described objective by solving the above-described problem, according to Aspect 1 of the present invention, there is provided a porous Cu member including: a member main body that is formed of Cu or a Cu alloy and has a porous structure; and a nano-Cu structure layer that is formed on at least a part of a surface of the member main body, in which the member main body has a porosity in a range of 38% or greater and 95% or less and a thickness in a range of 0.1 mm or greater and 1.0 mm or less, and the nano-Cu structure layer is formed as a layer by laminating Cu particles having an average length of 20 µm to 1 nm on the surface.

According to the porous Cu member of Aspect 1 of the present invention, since the porous Cu member is formed of Cu or a Cu alloy, has the member main body forming the porous structure, and has a porosity in a range of 38% or greater and 95% or less and a thickness in a range of 0.1 mm or greater and 1.0 mm or less, a pressure loss of a gas and a liquid is reduced, and the gas and the liquid can stably flow. In addition, the strength can be ensured, and the porous Cu member can be stably used as an electrode.

In addition, since the nano-Cu structure layer formed as a layer is formed by laminating Cu particles having an average length of 20 µm to 1 nm on at least a part of the surface of the member main body, CO₂ can be efficiently reduced using the Cu particles having an average length of 20 µm to 1 nm as a catalyst to produce a C2 or more organic compound such as ethanol.

The porous Cu member according to Aspect 2 of the present invention is characterized in that, in the porous Cu member according to Aspect 1 of the present invention, the nano-Cu structure layer is formed on one surface side of the member main body, and the nano-Cu structure layer on the one surface of the member main body has a coverage of 20% or greater.

According to the porous Cu member of Aspect 2 of the present invention, a catalytic action of the Cu particles having an average length of 20 µm to 1 nm can be reliably exhibited, and CO₂ reduction can be more efficiently performed.

The porous Cu member according to Aspect 3 of the present invention is characterized in that, in the porous Cu member according to Aspect 1 or Aspect 2 of the present invention, the Cu particles constituting the nano-Cu structure layer and having an average length of 20 µm to 1 nm have a dendrite shape or a spherical shape.

According to the porous Cu member of Aspect 3 of the present invention, the Cu particles constituting the nano-Cu structure layer and having the average length of 20 µm to 1 nm have a dendrite shape or a spherical shape, and thus the catalytic action of the nano-Cu can be reliably exhibited, and the CO₂ reduction can be more efficiently performed.

The porous Cu member according to Aspect 4 of the present invention is characterized in that, in the porous Cu member according to any one of Aspects 1 to 3 of the present invention, the porous Cu member has a Faraday efficiency of 1.0% or greater in a case of being used as an electrode for a co-electrolysis method to produce ethanol.

According to the porous Cu member of Aspect 4 of the present invention, since the porous Cu member has a Faraday efficiency of 1.0% or greater in a case of being used as an electrode for the electrolysis method to produce ethanol, ethanol can be efficiently produced by the CO₂ reduction using the co-electrolysis method. Advantageous Effects of Invention

According to the present invention, it is possible to provide a porous Cu member which has sufficient mechanical strength, has a low pressure loss with respect to a gas or a liquid, and can efficiently produce a C2 or more organic compound such as ethanol by promoting a CO₂ reduction reaction.

### BRIEF DESCRIPTION OF DRAWINGS

[FIG. 1] An explanatory view showing an example of a porous Cu member according to an embodiment of the present invention.
[FIG. 2] An enlarged explanatory view showing the porous Cu member of FIG. 1.
[FIG. 3A] An explanatory view showing a Cu particle having an average length of 20 µm to 1 nm, which constitutes a nano-Cu structure layer of the porous Cu member according to the embodiment of the present invention.
[FIG. 3B] An explanatory view showing a Cu particle having an average length of 20 µm to 1 nm, which constitutes a nano-Cu structure layer of the porous Cu member according to the embodiment of the present invention.
[FIG. 4] An explanatory view showing an example of an electrolytic cell using the porous Cu member according to the embodiment of the present invention.

### DESCRIPTION OF EMBODIMENTS

Hereinafter, a porous Cu member according to an embodiment of the present invention will be described with reference to the accompanying drawings.

A porous Cu member 10 according to the present embodiment is used as a cathode electrode in an electrolytic cell used for a co-electrolysis method of performing electrolysis by an oxidation reaction at an anode and electrolysis by a reduction reaction at a cathode.

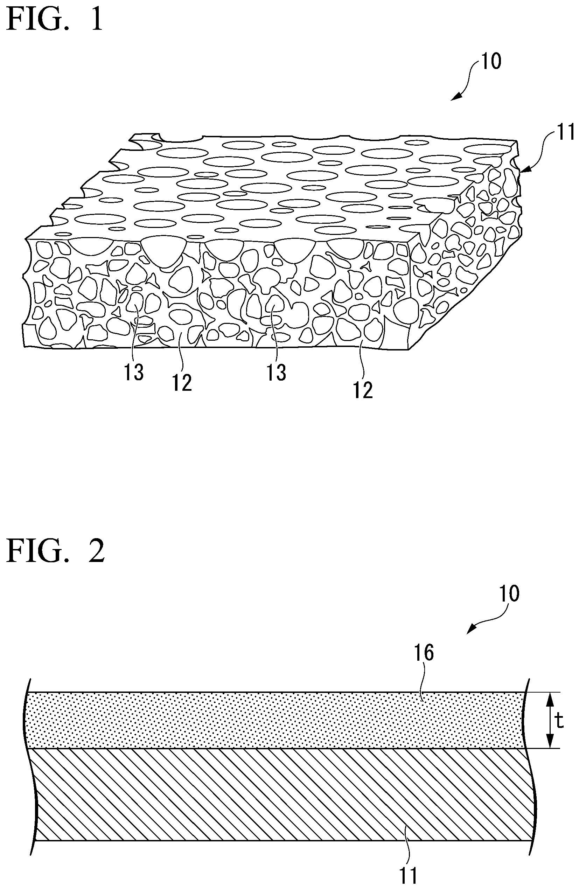

As shown in FIGS. 1 and 2, the porous Cu member 10 according to the present embodiment includes a member main body 11 and a nano-Cu structure layer 16 formed on at least a part of a surface of the member main body 11.

In the present embodiment, as shown in FIGS. 1 and 2, the member main body 11 is a sheet material, and the nano-Cu structure layer 16 is formed on one main surface (one surface) of the sheet material.

In the present embodiment, as shown in FIG. 1, the member main body 11 formed of Cu or a Cu alloy is a porous body and includes a skeleton portion 12 having a three-dimensional network structure and pore portions 13 surrounded by the skeleton portion 12.

Further, the pore portions 13 surrounded by the skeleton portion 12 have a structure that communicates with each other and are open to the outside of the member main body 11.

Further, the member main body 11 has a porosity P in a range of 38% or greater and 95% or less.

In a case where the porosity P of the member main body 11 is set to 38% or greater, a gas or a liquid can satisfactorily flow through the porous member 10. Meanwhile, in a case where the porosity P of the member main body 11 is set to 95% or less, the mechanical strength of the member main body 11 can be ensured, and the member main body 11 is easily handled.

In addition, the porosity P of the member main body 11 is preferably 45% or greater and more preferably 50% or greater. The porosity P of the member main body 11 is preferably 93% or less and more preferably 90% or less.

In addition, the porosity P of the member main body 11 is calculated by the following equation. $P \left(%\right) = \left(1-\left(W/\left(V\times {D}_{T}\right)\right)\right) \times 100$
W: mass (g) of member main body 11
V: volume (cm³) of member main body 11
D_{T}: true density (g/cm³) of metal material constituting member main body 11

Further, the thickness of the member main body 11 is in a range of 0.1 mm or greater and 1.0 mm or less. Here, in a case where the thickness of the member main body 11 having the porous structure is set to 0.1 mm or greater, the member main body 11 can sufficiently act as flow paths for a gas or a liquid. Meanwhile, in a case where the thickness of the member main body 11 is set to 1.0 mm or less, the member main body 11 is not excessively heavy and is easy to handle.

In addition, the thickness of the member main body 11 is preferably 0.2 mm or greater and more preferably 0.3 mm or greater. The thickness of the member main body 11 is preferably 0.9 mm or less and more preferably 0.8 mm or less.

In the present embodiment, the content of Cu in the Cu or Cu alloy constituting the member main body 11 formed of a porous body is preferably 80% by mass or greater, and the member main body 11 may contain, as elements other than Cu, for example, Zn, Sn, P, Ca, Be, Co, Ni, Fe, Mn, Al, and Mg.

In a case where the member main body 11 is formed of Cu or a Cu alloy in which the content of Cu is 80% by mass or greater, high conductive properties can be ensured.

In addition, the content of Cu in the Cu or Cu alloy constituting the member main body 11 is preferably 85% by mass or greater and more preferably 90% by mass or greater.

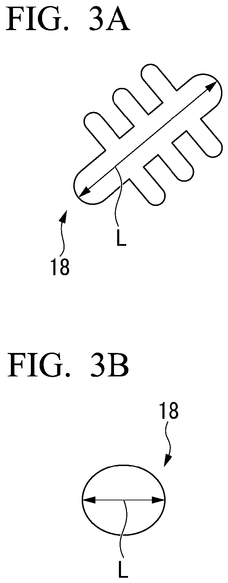

Further, in the present embodiment, the nano-Cu structure layer 16 is composed of Cu particles 18 having an average length of 20 µm to 1 nm as shown in FIGS. 3A and 3B.

Here, in the present embodiment, it is preferable that the Cu particles 18 having an average length of 20 µm to 1 nm have a dendrite shape as shown in FIG. 3A or a spherical shape as shown in FIG. 3B.

Further, in the present embodiment, the average length of the Cu particles 18 having an average length of 20 µm to 1 nm, which constitutes the nano-Cu structure layer 16, is preferably in a range of 200 nm or greater and 2000 nm or less. In addition, an average length L is an average length at which the longest straight line can be drawn in the Cu particles 18 in a case where a cross section of one Cu particle 18 is observed.

In a case where the average length of the Cu particles 18 is set to be in a range of 200 nm or greater and 2000 nm or less, the Cu particles 18 having an average length of 20 µm to 1 nm efficiently act as a catalyst, and the reduction reaction of CO₂ can be sufficiently promoted.

In addition, the average length of the Cu particles 18 having an average length of 20 µm to 1 nm is more preferably 250 nm or greater and still more preferably 300 nm or greater. Further, the average length of the Cu particles 18 having an average length of 20 µm to 1 nm is more preferably 1900 nm or less and still more preferably 1800 nm or less.

Here, in the present embodiment, the coverage of the nano-Cu structure layer 16 on one surface of the member main body 11 is preferably 20% or greater.

In a case where the coverage of the nano-Cu structure layer 16 on one surface of the member main body 11 is set to 20% or greater, the Cu particles 18 having an average length of 20 µm to 1 nm serve as a catalyst layer, and the reduction reaction of CO₂ efficiently proceeds.

In addition, the coverage of the nano-Cu structure layer 16 on one surface of the member main body 11 is preferably 30% or greater and more preferably 40% or greater.

Although not particularly limited, the coverage of the nano-Cu structure layer 16 on one surface of the member main body 11 may be 90% or less, 75% or less, or 65% or less.

Further, in the present embodiment, the Faraday efficiency in a case where the porous Cu member is used as an electrode for the co-electrolysis method to produce ethanol is preferably 1.0% or greater.

Although not particularly limited, the Faraday efficiency in a case where the porous Cu member is used as an electrode for the co-electrolysis method to produce ethanol may be 1.3% or greater, or 2.2% or greater.

In addition, although not particularly limited, the Faraday efficiency in a case where the porous Cu member is used as an electrode for the co-electrolysis method to produce ethanol may be 100% or less, 99% or less, 98% or less, or 97% or less.

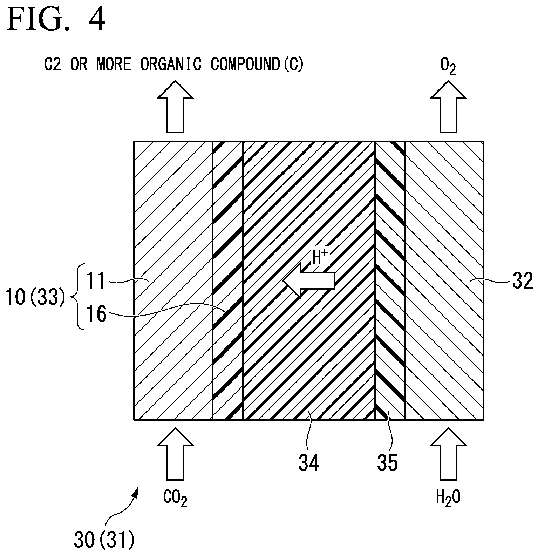

FIG. 4 is a schematic view showing a co-electrolytic device using the porous Cu member 10 according to the present embodiment. In addition, the co-electrolytic device of the present embodiment is a solid polymer type co-electrolytic device.

As shown in FIG. 4, a co-electrolytic device 30 of the present embodiment includes an electrolytic cell 31 including an anode electrode 32 and a cathode electrode 33 which are disposed to face each other, an ion permeable membrane 34 disposed between the anode electrode 32 and the cathode electrode 33, and a catalyst layer 35.

Here, the members used in general solid polymer type water electrolytic devices of the related art can be employed as the anode electrode 32, the ion permeable membrane 34, and the catalyst layer 35.

Further, the above-described cathode electrode 33 is composed of the porous Cu member 10 according to the present embodiment, and includes the member main body 11 formed of Cu or a Cu alloy, and the nano-Cu structure layer 16 formed on the surface of the member main body 11. In addition, the member main body 11 is a porous body, and has a structure provided with the skeleton portion 12 having a three-dimensional network structure and the pore portion 13 surrounded by the skeleton portion 12.

In the co-electrolytic device 30 (electrolytic cell 31) described above, water (H₂O) is supplied to the anode 32 side, and CO₂ is supplied to the cathode 33 side, as shown in FIG. 4. Further, the anode 32 and the cathode 33 are energized.

Then, water is electrolyzed at the anode electrode 32, and the generated oxygen (O₂) is discharged from the anode electrode 32, and hydrogen (H₂) moves to the cathode electrode 33.

Further, CO₂ is reduced at the cathode electrode 33, and for example, a C2 or more organic compound, such as ethanol, is produced.

In addition, the produced C2 or more organic compound (C) such as ethanol is discharged to the outside of the electrolytic cell 31 through the pore portion 13 of the member main body 11.

The porous Cu member 10 according to the present embodiment, which has been formed as described above includes the member main body 11 forming the porous structure formed of Cu or a Cu alloy, and the member main body 11 has a porosity P in a range of 38% or greater and 95% or less and a thickness in a range of 0.1 mm or greater and 1.0 mm or less. Therefore, the pressure loss of the gas and the liquid is reduced, and the gas and the liquid can stably flow through the porous member 10. In addition, the mechanical strength can be ensured, and the porous Cu member can be stably used as an electrode.

Further, since the nano-Cu structure layer 16 composed of the Cu particles 18 having an average length of 20 µm to 1 nm is formed on at least a part of the surface of the member main body 11, CO₂ can be efficiently reduced using nano-Cu as a catalyst to produce a C2 or more organic compound such as ethanol.

In the present embodiment, in a case where the nano-Cu structure layer 16 is formed on one surface of the member main body 11 and the coverage of the nano-Cu structure layer 16 on the one surface of the member main body 11 is in a range of 20% or greater and 100% or less, the Cu particles 18 having an average length of 20 µm to 1 nm, which serve as a catalyst, can be sufficiently brought into contact with a raw material such as CO₂, and the CO₂ reduction reaction can be promoted to more efficiently produce a C2 or more organic compound such as ethanol.

In the present embodiment, in a case where the Cu particles 18 having an average length of 20 µm to 1 nm, which constitute the nano-Cu structure layer 16, have a dendrite shape or a spherical shape, the catalytic action of the nano-Cu can be reliably exhibited, and the CO₂ reduction reaction can be promoted to more efficiently produce a C2 or more organic compound such as ethanol.

In the present embodiment, in a case where the average length of the Cu particles 18 having an average length of 20 µm to 1 nm, which constitute the nano-Cu structure layer 16, is in a range of 200 nm or greater and 2000 nm or less, the Cu particles 18 having an average length of 20 µm to 1 nm, which serve as a catalyst, can be sufficiently brought into contact with a raw material such as CO₂, and the CO₂ reduction reaction can be promoted to more efficiently produce a C2 or more organic compound such as ethanol.

In the present embodiment, in a case where the Faraday efficiency in a case of using the porous Cu member as an electrode for a co-electrolysis method to produce ethanol is 1.0% or greater, ethanol can be efficiently produced by the CO₂ reduction using the co-electrolysis method.

Hereinbefore, the embodiment of the present invention has been described, but the present invention is not limited thereto, and can be appropriately changed within a range not departing from the technical idea of the invention.

### Examples

Hereinafter, results of a verification test conducted to verify the effects of the present invention will be described.

First, member main bodies listed in Table 1 were prepared. The dimensions of each of the prepared member main bodies were 10 mm in width × 10 mm in length, and the thicknesses are as listed in Table 1.

A nano-Cu structure layer was formed on one surface of the member main body as listed in Table 1. Further, in the comparative example, the nano-Cu structure layer was not formed.

Here, a nano-Cu structure layer composed of Cu particles having a spherical shape and an average length of 20 µm to 1 nm was prepared as follows.

A beaker having a mouth diameter of 10 cm was filled with a 0.05 mol/L copper pyrophosphate aqueous solution to prepare an electrodeposition dispersion. The member main body was used as a working electrode, a Pt mesh having a size of 25 mm × 10 mm was prepared as a counter electrode, and the member main body and the Pt mesh were installed in the beaker such that the distance between the working electrode and the counter electrode was set to 20 mm. Electrodeposition was carried out using a potentiostat (SP-50, manufactured by Bio-Logic) under a condition of a current density of 2 to 30 mA/cm² such that the charge amount per electrode area was set to 2 C/cm².

In addition, a nano-Cu structure layer composed of Cu particles having a dendrite shape and an average length of 20 µm to 1 nm was prepared as follows.

A beaker having a mouth diameter of 10 cm was filled with a 0.05 mol/L copper pyrophosphate aqueous solution to prepare an electrodeposition dispersion. The member main body was used as a working electrode, a Pt mesh having a size of 25 mm × 10 mm was prepared as a counter electrode, and the member main body and the Pt mesh were installed in the beaker such that the distance between the working electrode and the counter electrode was set to 20 mm. Electrodeposition was carried out using a potentiostat (SP-50, manufactured by Bio-Logic) under a condition of a current density of 50 mA/cm² or greater such that the charge amount per electrode area was set to 2 C/cm².

A sample on which the nano-Cu structure layer was formed as described above was taken out, and the surface structure was observed using a desktop SEM (JCM-7000, manufactured by JEOL Ltd.). An SEM image was captured at an acceleration voltage of 15 kV and a measurement magnification of 5000 times in a case of observing nano-sized spherical Cu particles and a measurement magnification of 10000 times in a case of measuring nano-sized dendrite Cu particles, and the coating film thickness was measured using a measurement mode of the device. The obtained image was analyzed using analysis software (Fuji ImageJ).

First, the image quality was adjusted by setting each of Xsigma, Ysigma, and Zsigma to 2.0 in the Gaussian Blur 3D Filter. Thereafter, binarization processing was performed by the following procedure. A graph was created from the items of Image → Adjust → Threshold with the intensity plotted on the vertical axis and the light and shade plotted on the horizontal axis. The binarization processing was performed by distinguishing between light and shade with the bright and dark positions of the peak (in a case where a plurality of peaks occurred, the peak at the position with the highest brightness was used) observed in the obtained spectrum as a reference.

Thereafter, the boundary of the particles was separated by the Watershed algorithm from the obtained binarized image. Next, a process of Analyze Particles (as set numerical values, size; 0-Infinity, Circularity; 0.00-1.00) was performed to calculate the shape, the average length, and the coverage of the Cu particles having a nano size.

For the determination of the shape of the particles, the values of Major (major axis) and Minor (minor axis) of the parameters defining the ellipticity in the summary file obtained after the analysis of Analyze Particles were used, and the shape was defined as a dendrite shape in a case where the value of Major/Minor was greater than 1.7, and the shape was defined as a particle shape in a case where the value of Major/Minor was 1.7 or less.

The average length was determined by performing calculation using the equation of average length = 2 × √(A/π) with the value of Average Size (A) in the summary file obtained after the analysis of Analyze Particles.

Regarding the coverage, the value of %Area in the summary file obtained after the analysis of Analyze Particles was used.

Further, the thickness of the member main body was measured with a micrometer (manufactured by Mitutoyo Corporation).

The porosity of the member main body was calculated from the mass and volume of the member main body by the following equation. $P \left(%\right) = \left(1-\left(W/\left(V\times {D}_{T}\right)\right)\right) \times 100$
W: mass (g) of member main body 11
V: volume (cm³) of member main body 11
D_{T}: true density (g/cm³) of metal material constituting member main body 11

The obtained porous Cu member was incorporated into an electrolytic cell as a cathode electrode, and the Faraday efficiency (ethanol production efficiency) in a case of producing ethanol from CO₂ by electrolysis was measured. Table 1 lists the evaluation results.

The obtained example was incorporated into a cathode of a 1 cm² class electrochemical cell provided with an anion exchange type ion exchange membrane, and the current density was controlled to 100 mA/cm² by a potentiostat/galvanostat (HCP-803, manufactured by Bio-Logic) to flow between electrodes. Pure water as a raw material flowed into the anode at 10 cc/min using a precision diaphragm pump (Smooth Flow Pump Q Series, manufactured by TACMINA CORPORATION). Pure CO₂ gas was controlled to 10 cc/min by a mass flow controller (manufactured by KOFLOC (KOJIMA INSTRUMENTS INC.)), and further, a 0.1 M KHCO₃ aqueous solution was controlled to 1 cc/min by a precision diaphragm pump (KP21, manufactured by FLOM Corporation) and flowed into the cathode.

The solution after the reaction discharged from the cathode was separated from the gas, and the concentration of ethanol contained in the obtained liquid was measured by a high performance liquid chromatograph (Extrema, manufactured by JASCO Corporation). The concentration of ethanol obtained by the high performance liquid chromatograph was defined as C, and the Faraday efficiency FE was calculated from the following equation. $FE = n \times C \times F / \left(I\times t\times M\right)$

Here, the abbreviations are as follows.
I (A): constant current flowing through electrode during electrolysis
t (s): electrolysis time
C (g/L): concentration of ethanol measured by high performance liquid chromatograph
F (As/mol): Faraday constant
n: number of reaction electrons (12 in CO₂ → ethanol production reaction)
M (g/mol): molecular weight

**[Table 1]**

| | | Porous Cu member | | | | | | | Evaluation |
|---|---|---|---|---|---|---|---|---|---|
| | | Member main body | | | | Nano-Cu structure layer | | | Ethanol production efficiency (%) |
| | | Material | Structure | Porosity (%) | Thickness (mm) | Cu particles | | Coverage (%) | |
| | | | | | | Shape (Major/Minor) | Average length (nm) | | |
| Example of present invention | 1 | Oxygen-free copper | Sintered body | 80 | 0.2 | Dendrite (1.80) | 500 | 24 | 1.4 |
| | 2 | Oxygen-free copper | Sintered body | 79 | 0.2 | Dendrite (1.72) | 300 | 21 | 1.8 |
| | 3 | Oxygen-free copper | Sintered body | 77 | 0.2 | Spherical (1.61) | 900 | 57 | 7.1 |
| | 4 | Oxygen-free copper | Sintered body | 79 | 0.2 | Spherical (1.47) | 700 | 62 | 1.4 |
| | 5 | Oxygen-free copper | Sintered body | 38 | 0.1 | Spherical (1.45) | 900 | 50 | 3.2 |
| | 6 | Oxygen-free copper | Sintered body | 95 | 1.0 | Spherical (1.44) | 700 | 61 | 2.2 |
| | 7 | Oxygen-free copper | Mesh | 66 | 0.1 | Spherical (1.49) | 700 | 59 | 5.5 |
| | 8 | Cu alloy *1 | Mesh | 69 | 0.1 | Spherical (1.46) | 700 | 61 | 1.3 |
| Comparative Example | | Oxygen-free copper | Sintered body | 78 | 0.3 | None | | | 0.3 |

| | | | | | | | | | |
|---|---|---|---|---|---|---|---|---|---|
| *1 Cu alloy: Cu-20 mass% Zn | | | | | | | | | |

In the comparative example, the ethanol production efficiency was as low as 0.3%, and CO₂ could not be reduced to efficiently produce ethanol.

In contrast, in Examples 1 to 8 of the present invention in which the nano-Cu structure layer was formed on the member main body formed of Cu or a Cu alloy and having a porous structure, the ethanol production efficiency was as high as 1.3% or greater, and CO₂ could be reduced to efficiently produce ethanol.

As shown in the results of the above-described verification test, it has been confirmed that according to the examples of the present invention, it is possible to provide a porous Cu member which has sufficient strength, has a low pressure loss with respect to a gas or a liquid, and can efficiently produce a C2 or more organic compound such as ethanol by promoting a CO₂ reduction reaction.

### INDUSTRIAL APPLICABILITY

According to the present invention, it is possible to provide a porous Cu member which has sufficient strength, has a low pressure loss with respect to a gas or a liquid, and can efficiently produce a C2 or more organic compound such as ethanol by promoting a CO₂ reduction reaction.

### REFERENCE SIGNS LIST

10 Porous Cu member
16 Nano-Cu structure layer

## Claims

1. A porous Cu member comprising:
a member main body that is formed of Cu or a Cu alloy and has a porous structure; and
a nano-Cu structure layer that is formed on at least a part of a surface of the member main body,
wherein the member main body has a porosity in a range of 38% or greater and 95% or less; and a thickness in a range of 0.1 mm or greater and 1.0 mm or less, and
the nano-Cu structure layer is formed as a layer by laminating Cu particles having an average length of 20 µm to 1 nm on the surface.

2. The porous Cu member according to Claim 1,
wherein the nano-Cu structure layer is formed on one surface side of the member main body, and the nano-Cu structure layer on the one surface of the member main body has a coverage of 20% or greater.

3. The porous Cu member according to Claim 1 or 2,
wherein the Cu particles constituting the nano-Cu structure layer and having the average length of 20 µm to 1 nm have a dendrite shape or a spherical shape.

4. The porous Cu member according to Claim 1 or 2,
wherein the porous Cu member has a Faraday efficiency of 1.0% or greater in a case of being used as an electrode for a co-electrolysis method to produce ethanol.
